# EUROPEAN PATENT APPLICATION

(11) **EP 2 937 831 A1**
(43) Date of publication of application: **28.10.2015**
(21) Application number: 15165074.4
(22) Date of filing: 24.04.2015
(51) Int. Cl.: G06Q 30/02

(54) **METHOD, DEVICE AND SYSTEM FOR IDENTIFYING TARGET TERMINALS AND METHOD AND DEVICE FOR MONITORING TERMINALS**

(30) Priority: 25.04.2014 CN 201410171902
(71) Applicant: Xiaomi Inc., Beijing 100085 (CN)
(72) Inventor: Liu, Fang, 100085 BEIJING (CN); Liu, Zhenhua, 100085 BEIJING (CN)
(74) Representative: Delumeau, François Guy

(57) **Abstract**

The present disclosure relates to a method, device and system for identifying target terminals and a method and device for monitoring terminals. The method for identifying target terminals comprises: obtaining (201) accessing records of terminals accessing a destination; obtaining (202) a plurality of first browsing records corresponding respectively to promotional information browsed by the terminals that access the destination; identifying (203) the target terminals according to the accessing records and the plurality of first browsing records, in which the target terminals are terminals accessing the destination after browsing promotional information corresponding to the destination.

## Description

### TECHNICAL FIELD

The present disclosure generally relates to an Internet field, and more particularly, to a method, device and system for identifying target terminals and a method and device for monitoring terminals.

### BACKGROUND

With the development of the internet, more and more vendors put the promotional information of their commodities on the internet. That is, if a vendor wants to publish promotional information, he/she may put the promotional information on a website.

The inventors have observed that adding promotional information on a Website is unsatisfactory.

### SUMMARY

The embodiments of the present disclosure provide a method, device and system for identifying target terminals and a method and device for monitoring terminals to improve the publication of promotional information on a website. The technique solutions are as follows.

According to a first aspect, the invention relates to a method for identifying target terminals, comprising:
obtaining accessing records of terminals accessing a destination;
obtaining a plurality of first browsing records corresponding respectively to promotional information browsed by terminals that access the destination;
identifying the target terminals according to the accessing records and the plurality of first browsing records, in which the target terminals are terminals accessing the destination after browsing promotional information corresponding to the destination.

In an embodiment, identifying target terminals according to the accessing records and the plurality of first browsing records comprises:
detecting whether the promotional information corresponding to the destination was browsed by a first terminal according to the plurality of first browsing records;
detecting whether a browsing time of the first terminal is earlier than an accessing time when the first terminal accesses the destination, if it is detected that the promotional information corresponding to the destination was browsed by the first terminal;
identifying the first terminal as one of the target terminals, if it is detected that the browsing time is earlier than the accessing time.

In an embodiment, the step of detecting whether the promotional information corresponding to the destination was browsed by a first terminal according to the plurality of first browsing records further comprises:
detecting whether there is a first browsing record comprising a terminal identification of the first terminal and a destination identification of the destination, if each of the plurality of first browsing records comprises a terminal identification, a promotional information identification, a destination identification and a browsing time corresponding to the promotional information;
obtaining a promotional information base corresponding to the destination and detecting whether the promotional information corresponding to the destination was browsed by the first terminal according to the first browsing record and the promotional information base, if each of the plurality of first browsing records comprises a terminal identification, a promotional information identification and a browsing time.

In an embodiment, the step of detecting whether a browsing time of the first terminal is earlier than an accessing time when the first terminal accesses the destination comprises:
detecting whether the browsing time of the first terminal is within a predetermined time range according to the accessing records, in which the predetermined time range is a period of time earlier than the accessing time when the first terminal accesses the destination.

In an embodiment, the step of obtaining accessing records of terminals accessing a destination comprises:
obtaining the accessing records collected by a monitor, in which the accessing records are collected by the monitor provided at the destination according to broadcasting signals sent by the terminals, in which the broadcasting signal comprises a wireless fidelity signal and/or a Bluetooth signal.

In an embodiment, the method further comprises:
obtaining a second browsing record of all promotional information in a promotional information base corresponding to the destination;
analyzing all the promotional information in the promotional information base according to the second browsing record of all the promotional information, the plurality of first browsing records and the accessing records.

In an embodiment, analyzing all the promotional information in the promotional information base according to the second browsing record of all the promotional information, the plurality of first browsing records and the accessing records comprises:
calculating a number of the target terminals corresponding to first promotional information according to the accessing records and the plurality of first browsing records;
calculating a number of times that the first promotional information was browsed according to the second browsing record of all the promotional information;
calculating a conversion rate of the first promotional information according to the number of the target terminals and the number of times.

In one embodiment, the steps of the method for identifying target terminals are determined by computer program instructions.

Consequently, according to a second aspect, the invention is also directed to a computer program for executing the steps of a method for identifying target terminals as described above when this program is executed by a computer or a processor of a terminal device.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

According to a second aspect, the invention relates to a method for monitoring terminals, comprising:
obtaining terminal identifications of terminals accessing a destination;
recording accessing time of the terminals;
generating accessing records of the terminals accessing the destination according to the terminal identifications and the accessing time of the terminals;
sending the accessing records to a server, in which the accessing records are configured for instructing the server to obtain a plurality of first browsing records corresponding respectively to promotional information browsed by the terminals that access the destination, and to identify target terminals according to the accessing records and the plurality of first browsing records, in which the target terminals are terminals accessing the destination after browsing promotional information corresponding to the destination.

In an embodiment, the step of obtaining terminal identifications of terminals accessing a destination comprises:
receiving a broadcasting signal sent by a first terminal, in which the broadcasting signal comprises a wireless fidelity signal and/or a Bluetooth signal;
extracting a terminal identification of the first terminal from the broadcasting signal, in which the terminal identification comprises a MAC address of the first terminal.

In one embodiment, the steps of the method for monitoring terminals are determined by computer program instructions.

Consequently, according to a second aspect, the invention is also directed to a computer program for executing the steps of a method for monitoring terminals as described above when this program is executed by a computer or a processor of a terminal device.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

In one embodiment, the information medium can be an integrated circuit in which the program is incorporated, the circuit being adapted to execute the method in question or to be used in its execution.

According to a third aspect, the invention relates to a device for identifying target terminals, comprising:
a first obtaining module, configured for obtaining accessing records of terminals accessing a destination;
a second obtaining module, configured for obtaining a plurality of first browsing records corresponding respectively to promotional information browsed by the terminals that access the destination;
a terminal identifying module, configured for identifying the target terminals according to the accessing records obtained by the first obtaining module and the plurality of first browsing records obtained by the second obtaining module, in which the target terminals are terminals accessing the destination after browsing promotional information corresponding to the destination.

In an embodiment, the terminal identifying module comprises:
a terminal detecting unit, configured for detecting whether the promotional information corresponding to the destination was browsed by a first terminal according to the plurality of first browsing records;
a time detecting unit, configured for detecting whether a browsing time of the first terminal is earlier than an accessing time when the first terminal accesses the destination, if a detect result of the terminal detecting unit indicates that the promotional information corresponding to the destination was browsed by the first terminal;
a terminal identifying unit, configured for identifying the first terminal as one of the target terminals, if a detect result of the time detecting unit indicates that the browsing time is earlier than the accessing time.

In an embodiment, the terminal detecting unit comprises:
a first detecting sub unit, configured for detecting whether there is a first browsing record comprising a terminal identification of the first terminal and a destination identification of the destination, if each of the plurality of first browsing records comprises a terminal identification, a promotional information identification, a destination identification and a browsing time corresponding to the promotional information;
a second detecting sub unit, configured for obtaining a promotional information base corresponding to the destination and detecting whether the promotional information corresponding to the destination was browsed by the first terminal according to the first browsing record and the promotional information base, if each of the plurality of first browsing records comprises a terminal identification, a promotional information identification and a browsing time.

In an embodiment, the time detecting unit is configured for detecting whether the browsing time of the first terminal is within a predetermined time range according to the accessing records, in which the predetermined time range is a period of time earlier than the accessing time when the first terminal accesses the destination.

In an embodiment, the first obtaining module is configured for obtaining the accessing records collected by a monitor, in which the accessing records are collected by the monitor provided at the destination according to broadcasting signals sent by the terminals, in which the broadcasting signal comprises a wireless fidelity signal and/or a Bluetooth signal.

In an embodiment, the device further comprises:
a third obtaining module, configured for obtaining a second browsing record of all promotional information in a promotional information base corresponding to the destination;
an analyzing module, configured for analyzing all the promotional information in the promotional information base according to the second browsing record of all the promotional information, the plurality of first browsing records and the accessing records.

In an embodiment, the analyzing module comprises:
a first calculating unit, configured for calculating a number of the target terminals corresponding to first promotional information according to the accessing records and the plurality of first browsing records;
a second calculating unit, configured for calculating times that the first promotional information was browsed according to the second browsing record of all the promotional information;
a third calculating unit, configured for calculating a conversion rate of the first promotional information according to the number calculated by the first calculating unit and the number of times calculated by the second calculating unit.

According to a fourth aspect, the invention relates to a device for monitoring terminals, comprising:
an identification obtaining module, configured for obtaining terminal identifications of terminals accessing a destination;
a time recording module, configured for recording accessing time of the terminals;
a record generating module, configured for generating accessing records of the terminals accessing the destination according to the terminal identifications of the terminals obtained by the identification obtaining module and the accessing time of the terminals recorded by the time recording module;
a record sending module, configured for sending the accessing records generated by the record generating module to a server, in which the accessing records are configured for instructing the server to obtain a plurality of first browsing records corresponding respectively to promotional information browsed by the terminals that access the destination, and to identify target terminals according to the accessing records and the plurality of first browsing records, in which the target terminals are terminals accessing the destination after browsing promotional information corresponding to the destination.

In an embodiment, the identification obtaining module comprises:
a signal receiving unit, configured for receiving a broadcasting signal sent by a first terminal, in which the broadcasting signal comprises a wireless fidelity signal and/or a Bluetooth signal;
an identification extracting unit, configured for extracting a terminal identification of the first terminal from the broadcasting signal received by the signal receiving unit, in which the terminal identification comprises a MAC address of the first terminal.

According to a fifth aspect, the invention relates to a server, comprising:
one or more processors;
a memory; and
one or more modules, in which the one or more modules are stored in the memory and are configured to be performed by the one or more processor, and are configured for:
   obtaining accessing records of terminals accessing a destination;
   obtaining a plurality of first browsing records corresponding respectively to promotional information browsed by the terminals that access the destination;
   identifying target terminals according to the accessing records and the plurality of first browsing records, in which the target terminals are terminals accessing the destination after browsing promotional information corresponding to the destination.

According to a sixth aspect, the invention relates toa monitor, comprising:
one or more processing components;
a memory; and
one or more modules, in which the one or more modules are stored in the memory and are configured to be performed by the one or more processor, and are configured for:
   obtaining terminal identifications of terminals accessing a destination;
   recording accessing time of the terminals;
   generating accessing records of the terminal accessing the destination according to the terminal identifications and the accessing time of the terminals;
   sending the accessing records to a server, in which the accessing records are configured for instructing the server to obtain a plurality of first browsing records corresponding to promotional information browsed by the terminals that access the destination and to identify target terminals according to the accessing records and the plurality of first browsing records, in which the target terminals are terminals accessing the destination after browsing promotional information corresponding to the destination.

According to a seventh aspect, the invention relates to a system for identifying target terminals, comprising:
the server is connected with the monitor via a wired or wireless network, the server comprises a device for identifying target terminals according to the third aspect or possible implementations of the third aspect of embodiments of the present disclosure;
the monitor is connected with the server via a wired or wireless network, the monitor comprises a device for monitoring terminals according to the fourth aspect or possible implementations of the fourth aspect of embodiments of the present disclosure.

According to an eighth aspect, the invention relates to a system for identifying target terminals, comprising: a server according to the sixth aspect of embodiments of the present disclosure and a monitor according to the seventh aspect of embodiments of the present disclosure.

The technical solution disclosed in the embodiments of the present disclosure can have an advantageous effect as follows:

By obtaining accessing records of terminals accessing a destination, obtaining a plurality of first browsing records corresponding respectively to promotional information browsed by the terminals that access the destination, and then identifying the target terminals according to the accessing records and the plurality of first browsing records in which the target terminals are terminals accessing the destination after browsing promotional information corresponding to the destination, the problem in a related art that a vendor cannot determine whether the promotional information published on a website appeals to customers or cannot determine how many customers the promotional information appeals to is solved, and an effect of determining which terminals of the terminals accessing a destination are terminals accessing the destination after browsing promotional information corresponding to the destination is achieved, and thus the vendor can determine how many customers the promotional information published on the website appeals to.

In an example, if a vendor wants to put promotional information on a website, the vendor may upload the promotional information to a web server. When a user visits the website, the web server sends the promotional information to the user. Thus, the user may purchase in the shop of the vendor after browsing the promotional information. For example, a shop offers a 50% discount on all commodities during the anniversary celebration and publishes promotional information of selling clothes at a 50% discount on a website, such that if a user visits the website and browses the promotional information, the user may go to the shop to purchase.

Since the customers purchasing in the shop may be users browsing the promotional information on a website or may be persons passing by the shop or may be old customers of the shop, the vendor can now determine whether the promotional information published on the website appeals to customers or can now determine how many customers the promotional information appeals to according to this example.

It is to be understood that both the foregoing general description and the following detailed description are exemplary and explanatory only and are not restrictive of the disclosure, as claimed.

### BRIEF DESCRIPTION OF THE DRAWINGS

The accompanying drawings, which are incorporated in and constitute a part of this specification, illustrate embodiments consistent with the disclosure and, together with the description, serve to explain the principles of the disclosure.
Fig. 1 is a schematic diagram illustrating an operating environment of a method for identifying target terminals according to some exemplary embodiments of the present disclosure.
Fig. 2 is a flow chart of a method for identifying target terminals according to an exemplary embodiment of the present disclosure.
Fig. 3 is a flow chart of a method for monitoring terminals according to an exemplary embodiment of the present disclosure.
Fig. 4A is a schematic diagram illustrating a process of a method for identifying target terminals according to an exemplary embodiment of the present disclosure.
Fig. 4B is a schematic diagram illustrating a process of another method for identifying target terminals according to an exemplary embodiment of the present disclosure.
Fig. 4C is a schematic diagram illustrating an operating environment of a method for identifying target terminals according to an exemplary embodiment of the present disclosure.
Fig. 5 is a block diagram of a device for identifying target terminals according to an exemplary embodiment of the present disclosure.
Fig. 6A is a block diagram of a device for identifying target terminals according to an exemplary embodiment of the present disclosure.
Fig. 6B is a block diagram of a terminal detecting unit according to an exemplary embodiment of the present disclosure.
Fig. 6C is a block diagram of another device for identifying target terminals according to an exemplary embodiment of the present disclosure.
Fig. 7 is a block diagram of a device for monitoring terminals according to an exemplary embodiment of the present disclosure.
Fig. 8 is a block diagram of another device for monitoring terminals according to an exemplary embodiment of the present disclosure.
Fig. 9 is a schematic diagram of a server according to an exemplary embodiment of the present disclosure.
Fig. 10 is a schematic diagram of a monitor according to an exemplary embodiment of the present disclosure.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the disclosure. Instead, they are merely examples of apparatuses and methods consistent with aspects related to the disclosure as recited in the appended claims.

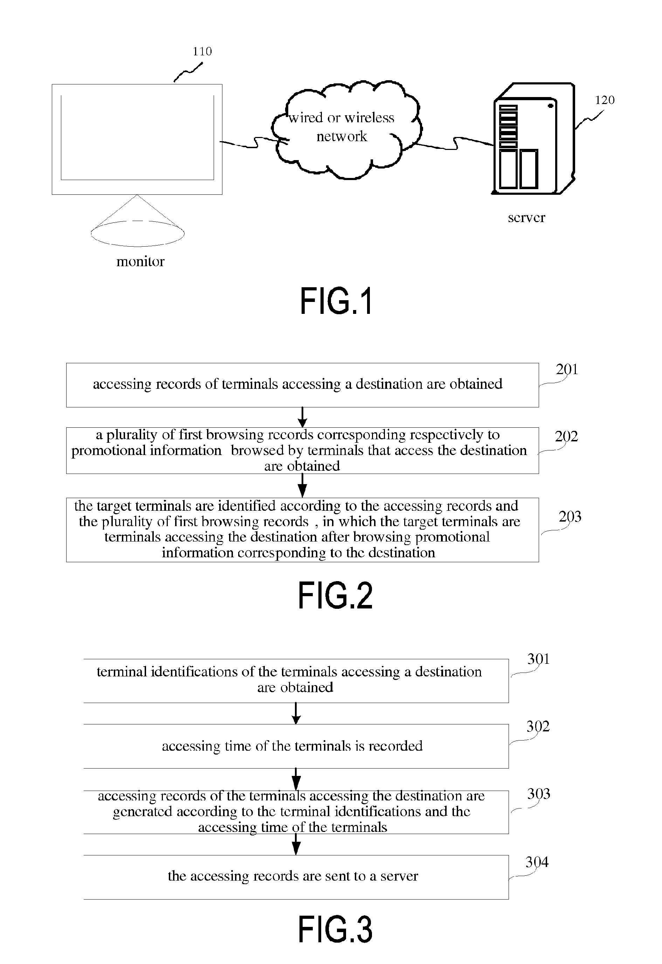

Fig. 1 is a schematic diagram illustrating an operating environment of a method for identifying target terminals according to some exemplary embodiments of the present disclosure. As shown in Fig. 1, in the operating environment, there are a monitor 110 and a server 120.

The monitor 110 is an equipment provided at a destination and configured for collecting accessing records of terminals accessing the destination. The monitor 110 may be connected with the server 120 via a wired or wireless network, such that the monitor 110 may send the accessing records to the server 120.

The server 120 may be connected with the monitor 110 via a wired or wireless network. The server 120 may obtain a plurality of first browsing records corresponding respectively to promotional information browsed by the terminals, and obtain the accessing records of the terminals accessing the destination from the monitor 110, such that the server 120 may determine whether the terminals accessing the destination are terminals accessing the destination after browsing promotional information corresponding to the destination according to the accessing records and the plurality of first browsing records.

Fig. 2 is a flow chart of a method for identifying target terminals according to an exemplary embodiment of the present disclosure. As shown in Fig. 2, the method for identifying target terminals is applied in the server 120 in the operating environment illustrated in Fig. 1. The method for identifying target terminals may include the following steps.

In step 201, accessing records of terminals accessing a destination are obtained.

In step 202, a plurality of first browsing records corresponding respectively to promotional information browsed by the terminals that access the destination are obtained.

In step 203, the target terminals are identified according to the accessing records and the plurality of first browsing records, in which the target terminals are terminals accessing the destination after browsing promotional information corresponding to the destination.

As described above, with the method for identifying target terminals according to embodiments of the present disclosure, by obtaining accessing records of terminals accessing a destination, obtaining a plurality of first browsing records corresponding respectively to promotional information browsed by the terminals that access the destination, and then identifying the target terminals according to the accessing records and the plurality of first browsing records in which the target terminals are terminals accessing the destination after browsing promotional information corresponding to the destination, the problem in a related art that a vendor cannot determine whether the promotional information published on a website appeals to customers or cannot determine how many customers the promotional information appeals to is solved, and an effect of determining which terminals amongst the terminals accessing a destination are terminals accessing the destination after browsing promotional information corresponding to the destination is achieved, and thus the vendor can determine how many customers the promotional information published on the website appeals to.

Fig. 3 is a flow chart of a method for monitoring terminals according to an exemplary embodiment of the present disclosure. As shown in Fig. 3, the method for monitoring terminals is applied in the monitor 110 in the operating environment illustrated in Fig. 1. The method for monitoring terminals may include the following steps.

In step 301, terminal identifications of terminals accessing a destination are obtained.

In step 302, accessing time of the terminals is recorded.

In step 303, accessing records of the terminals accessing the destination are generated according to the terminal identifications and the accessing time of the terminals.

In step 304, the accessing records are sent to a server.

The accessing records are configured for instructing the server to obtain a plurality of first browsing records corresponding respectively to promotional information browsed by the terminals that access the destination, and to identify target terminals according to the accessing records and the plurality of first browsing records, in which the target terminals are terminals accessing the destination after browsing promotional information corresponding to the destination.

As described above, with the method for identifying target terminals according to embodiments of the present disclosure, by recording terminal identifications and accessing time of terminals accessing a destination, generating accessing records of the terminals accessing the destination according to the terminal identifications and the accessing time of the terminals and sending the accessing records to a server such that the server may obtain a plurality of first browsing records corresponding respectively to promotional information browsed by the terminals that access the destination and then identify target terminals according to the accessing records and the plurality of first browsing records, in which the target terminals are terminals accessing the destination after browsing promotional information corresponding to the destination, the problem in a related art that a vendor cannot determine whether the promotional information published on a website appeals to customers or cannot determine how many customers the promotional information appeals to is solved, and an effect of determining which terminals of the terminals accessing a destination are terminals accessing the destination after browsing promotional information corresponding to the destination is achieved, and thus the vendor can determine how many customers the promotional information published on the website appeals to.

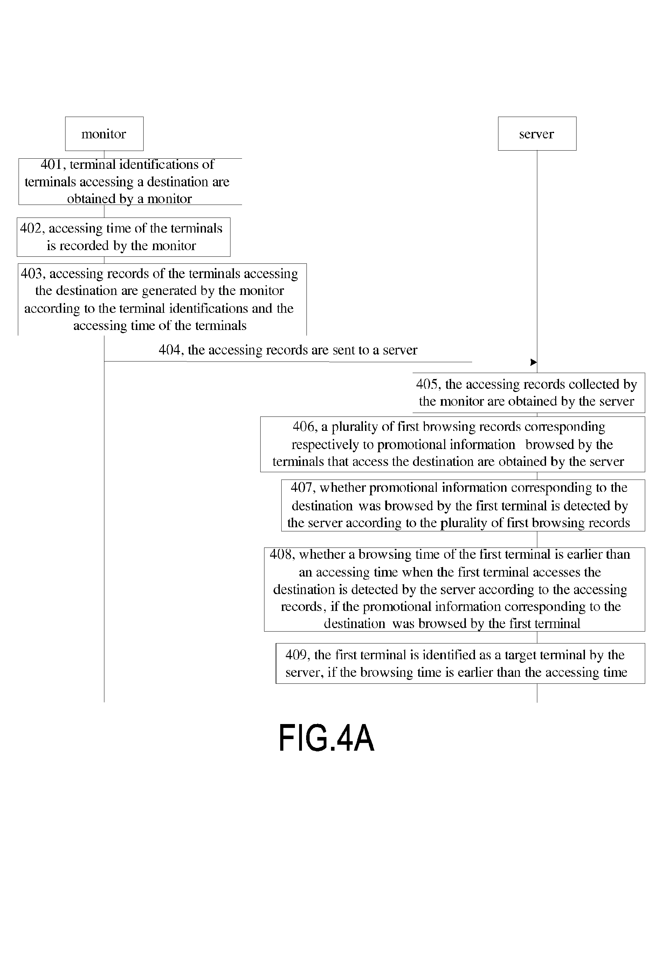

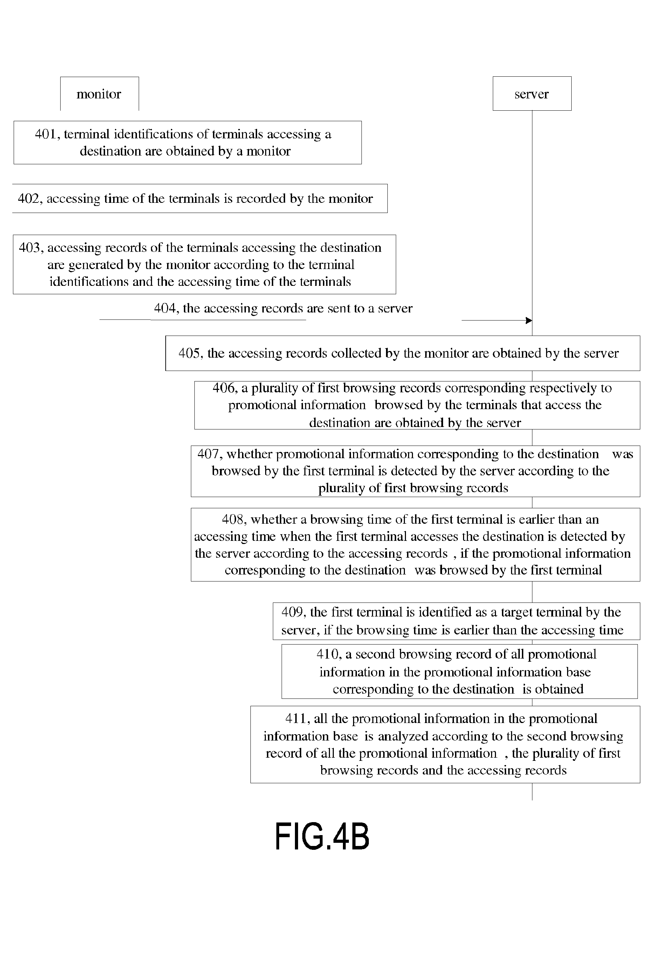

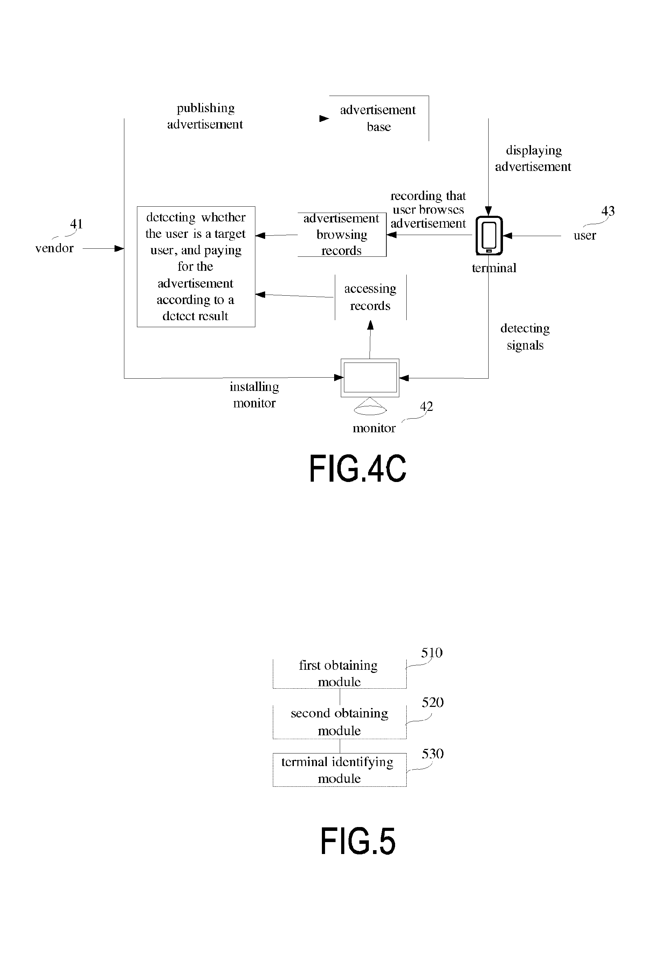

Fig. 4A is a schematic diagram illustrating a process of a method for identifying target terminals according to an exemplary embodiment of the present disclosure. As shown in Fig. 4, the method for identifying target terminals is applied in the operating environment illustrated in Fig. 1. The method for identifying target terminals may include the following steps.

In step 401, terminal identifications of terminals accessing a destination are obtained by a monitor.

A vendor may install a monitor in his/her shop, such that when users carrying terminals enter the shop, the monitor may obtain terminal identifications of the terminals accessing the shop. For example, when Xiaohua enters a shop "XX clothes shop", a monitor in the shop "XX clothes shop" may obtain a terminal identification of a terminal carried by Xiaohua.

In an implementation, the step of obtaining terminal identifications of terminals accessing a destination by the monitor may include the following steps.

Firstly, a broadcasting signal sent by a first terminal is received, in which the broadcasting signal comprises a wireless fidelity (WiFi) signal and/or a Bluetooth signal.

The first terminal can send a broadcasting signal in real time. For example, if the first terminal activates a WiFi function, the first terminal may broadcast a WiFi signal in real time; if the first terminal activates a Bluetooth function, the first terminal may broadcast a Bluetooth signal in real time. Thus, when the first terminal enters an area monitored by a monitor, the monitor may receive a broadcasting signal sent by the first terminal. In this implementation, the broadcasting signal sent by the first terminal may comprise a MAC (Media Access Control) address of the first terminal.

Secondly, a terminal identification of the first terminal is extracted from the broadcasting signal, in which the terminal identification comprises a MAC address of the first terminal.

After receiving the broadcasting signal, the monitor may extract the terminal identification of the first terminal from the broadcasting signal, in which the terminal identification comprises a MAC address of the first terminal.

In step 402, accessing time of the terminals is recorded by the monitor.

The monitor may record accessing time of the terminals. In an implementation, since the broadcasting signal sent by the first terminal is received by the monitor, the first terminal is at the destination, and thus the monitor may record the time when the broadcasting signal sent by the first terminal is received and define the recorded time as accessing time of the first terminal.

In step 403, accessing records of the terminals accessing the destination are generated by the monitor according to the terminal identifications and the accessing time of the terminals.

In an implementation, in order to distinguish accessing records generated by different monitors, i.e. to distinguish accessing records of different destinations, the accessing records generated by the monitor may also include a destination identification of the destination, which is not limited in the embodiments of the present disclosure.

In step 404, the accessing records are sent to a server.

After generating the accessing records, the monitor may send the accessing records to a server.

The accessing records are configured for instructing the server to obtain a plurality of first browsing records corresponding respectively to promotional information browsed by the terminals that access the destination, and to identify target terminals according to the accessing records and the plurality of first browsing records, in which the target terminals are terminals accessing the destination after browsing promotional information corresponding to the destination.

In step 405, the accessing records collected by the monitor are obtained by the server.

Correspondingly, the server may obtain accessing records collected by the monitor.

It should be explained that, in this embodiment the monitor is actively sending the accessing records to the server after generating the accessing records. In another implementation, the monitor may instead send the accessing records to the server after receiving a requesting signal sent by the server for requesting the accessing records. In another implementation, the server may also request the accessing records from the monitor at predetermined intervals.

In step 406, a plurality of first browsing records corresponding respectively to promotional information browsed by the terminals that access the destination are obtained by the server.

After obtaining the accessing records of the terminals accessing the destination, the server may obtain a plurality of first browsing records corresponding respectively to promotional information browsed by the terminals that access the destination. Since terminals recorded in the accessing records are the terminals accessing the destination, the server may obtain the plurality of first browsing records corresponding respectively to promotional information browsed by the terminals recorded in the accessing records.

In an implementation, a web server may record a first browsing record of the first terminal when a user visits the website and browses promotional information using the first terminal, in which the web server is a server corresponding to a webpage browsed by the user. For example, when the user browses a webpage "X forum", the web server is a server of the webpage "X forum". Of course, in another implementation, when the user browses the promotional information, the first terminal of the user may send a browsing request to another server such that this other server may record a first browsing record of the first terminal. Moreover, the web server and the other server may be the same server as the server represented in the operating environment illustrated in Fig. 1.. Also, if the web server and the other server recording the plurality of first browsing records are not the server represented in the operating environment illustrated in Fig. 1, the server may obtain the plurality of first browsing records corresponding respectively to promotional information browsed by the terminals, and if the web server or the other server is the server represented in the operating environment illustrated in Fig. 1, the server may obtain the plurality of first browsing records corresponding respectively to promotional information browsed by the terminals directly. The method for obtaining the plurality of first browsing records is not limited in the embodiments of the present disclosure.

It should be explained that, in order to identify which promotional information was browsed by the first terminal and when the promotional information was browsed, the first browsing record may include a promotional information identification and a browsing time of the first terminal, and in order to distinguish different terminals, the first browsing record may also include a terminal identification of the first terminal. Of course, in another implementation, the first browsing record may include other information according to different requirements. For example, in order to identify which shop the promotional information is used for promoting, the first browsing record may further include a destination identification corresponding to the promotional information. The content of the first browsing record is not limited in the embodiments of the present disclosure.

In step 407, whether promotional information corresponding to the destination was browsed by the first terminal is detected by the server according to the plurality of first browsing records.

After receiving the plurality of first browsing records, the server may detect whether the promotional information corresponding to the destination was browsed by the first terminal according to the plurality of first browsing records.

the step of detecting whether the promotional information corresponding to the destination was browsed by the first terminal may include any of the following ways.

### First way

Whether there is a first browsing record comprising a terminal identification of the first terminal and a destination identification of the destination is detected, if each of the plurality of first browsing records comprises a terminal identification, a promotional information identification, a destination identification and a browsing time corresponding to the promotional information.

If each of the plurality of first browsing records comprises the terminal identification, the promotional information identification, the destination identification and the browsing time corresponding to the promotional information, the server may detect whether there is a first browsing record comprising the terminal identification of the first terminal and the destination identification of the destination. If there is the first browsing record comprising the terminal identification of the first terminal and the destination identification of the destination in the plurality of first browsing records, it is detected that the promotional information corresponding to the destination was browsed by the first terminal. If there is not the first browsing record comprising the terminal identification of the first terminal and the destination identification of the destination in the plurality of first browsing records, it is detected that the promotional information corresponding to the destination was not browsed by the first terminal.

In another implementation, the server may select a first browsing record comprising the terminal identification of the first terminal, and then detect whether the first browsing record comprises the destination identification of the destination, if the first browsing record comprises the destination identification, it is detected that the promotional information corresponding to the destination was browsed by the first terminal, otherwise it is detected that the promotional information corresponding to the destination iwas not browsed by the first terminal.

### Second way

A promotional information base corresponding to the destination is obtained and whether the promotional information corresponding to the destination was browsed by the first terminal is detected according to the first browsing record and the promotional information base, if each of the plurality of first browsing records comprises a terminal identification, a promotional information identification and a browsing time.

If each of the plurality of first browsing records merely comprises the terminal identification, the promotional information identification and the browsing time, the server may obtain the promotional information base corresponding to the destination to know whether the promotional information recorded in the first browsing record is the promotional information corresponding to the destination, such that the server may detect whether the promotional information corresponding to the destination was browsed by the first terminal according to the first browsing record and the promotional information base.

Since the server may establish a relationship between the promotional information identification and the destination identification of the destination promoted by a vendor when the vendor publishes promotional information, the server may query the relationship to obtain the promotional information base corresponding to the destination.

Moreover, the step of detecting by the server whether the promotional information corresponding to the destination was browsed by the first terminal according to the first browsing record and the promotional information base may include the following step.

The server detects whether the promotional information recorded in the first browsing record is in the obtained promotional information base, if the detect result indicates that the promotional information recorded in the first browsing record is in the obtained promotional information base, the server may determine that the promotional information corresponding to the destination was browsed by the first terminal.

In step 408, whether a browsing time of the first terminal is earlier than an accessing time when the first terminal accesses the destination is detected by the server according to the accessing records, if the promotional information corresponding to the destination was browsed by the first terminal.

In order to further detect whether the promotional information corresponding to the destination was browsed by the first terminal before the first terminal accesses the destination, the server may detect whether the browsing time of the first terminal is earlier than the accessing time when the first terminal accesses the destination according to the accessing records.

Since a vendor may publish a same promotional information on the internet for a long time, and after browsing the promotional information, the user usually accesses the corresponding destination to purchase in a short time instead of accessing the corresponding destination to purchase long after browsing the promotional information, the step of detecting by the server whether the browsing time of the first terminal is earlier than the accessing time when the first terminal accesses the destination according to the accessing records may include the step of detecting whether the browsing time of the first terminal is within a predetermined time range according to the accessing records.

If a detect result of the server indicates that the browsing time of the first terminal is within the predetermined time range, the server may determine that the browsing time of the first terminal is earlier than the accessing time when the first terminal accesses the destination; if the detect result of the server indicates that the browsing time of the first terminal is not within the predetermined time range, since the user may forget the promotional information browsed by him/her, the server may not determine that the promotional information corresponding to the destination was browsed by the first terminal before the first terminal accesses the destination. At this time, the procedure may be finished.

The predetermined time range is a period of time earlier than the accessing time when the first terminal accesses the destination. For example, the predetermined time range is from a month earlier than the accessing time when the first terminal accesses the destination to the accessing time.

In step 409, the first terminal is identified as a target terminal by the server, if the browsing time is earlier than the accessing time.

If a detect result of the server indicates that the browsing time of the first terminal is earlier than the accessing time, the server may determine that the first terminal is a terminal accessing the destination after browsing promotional information of the destination, i.e. the server identifies the first terminal as a target terminal. The target terminal is a terminal accessing the destination after browsing the promotional information corresponding to the destination.

It should be explained that, since the target terminal is carried by a customer that the promotional information appeals to and that yields a profit to the vendor, the vendor may pay for the promotional information to the website publishing the promotional information according to a number of the target terminals accessing the destination, such that the problem that the vendor pays a lot for the promotional information while the published promotional information appeals to nobody or few customers is solved. Meanwhile, the vendor may obtain the number of the target terminals accessing his/her shop from the server, and record a spending amount of a customer when the customer purchases a commodity, such that the vendor may calculate the profit yielded by each target terminal, that is, the vendor may determine whether the published promotional information yields a profit.

As described above, with the method for identifying target terminals according to embodiments of the present disclosure, by obtaining accessing records of terminals accessing a destination, obtaining a plurality of first browsing records corresponding respectively to promotional information browsed by the terminals that access the destination, and then identifying the target terminals according to the accessing records and the plurality of first browsing records in which the target terminals are terminals accessing the destination after browsing promotional information corresponding to the destination, the problem in a related art that a vendor cannot determine whether the promotional information published on a website appeals to customers or cannot determine how many customers the promotional information appeals to is solved, and an effect of determining which terminals of the terminals accessing a destination are terminals accessing the destination after browsing promotional information corresponding to the destination is achieved, and thus the vendor can determine how many customers the promotional information published on the website appeals to

In an embodiment, when the terminal enters in the area monitored by the monitor, the monitor may obtain the terminal identification of the terminal according to the broadcasting signal sent by the terminal conveniently and efficiently, and the user need not perform any operation, and an effect that the monitor conveniently calculates customer flows of the shop is achieved.

It should be explained that, referring to Fig. 4B, after identifying the target terminals, the server may further execute the following steps.

In step 410, a second browsing record of all promotional information in the promotional information base corresponding to the destination is obtained.

The server may obtain the second browsing record of all the promotional information in the promotional information base corresponding to the destination. In an implementation, firstly the server may obtain the promotional information base corresponding to the destination, and then may obtain the second browsing record of all the promotional information in the promotional information base, which are not elaborated herein.

In step 411, all the promotional information in the promotional information base is analyzed according to the second browsing record of all the promotional information, the plurality of first browsing records and the accessing records.

The step of analyzing all the promotional information in the promotional information base by the server according to the second browsing record of all the promotional information, the plurality of first browsing records and the accessing records may include the following steps.

Firstly, a number of the target terminals corresponding to first promotional information is calculated according to the accessing records and the plurality of first browsing records.

The server may calculate the number of the target terminals corresponding to first promotional information according to the accessing records and the plurality of first browsing records. In an actual implementation, the server may classify the identified target terminals according to the promotional information browsed by the target terminals, and then count the number of the target terminals corresponding to each promotional information, i.e. the number of each class of target terminals.

Secondly, the number of times that the first promotional information was browsed are calculated according to the second browsing record of all the promotional information.

In an implementation, the server may count a number of browsing records corresponding to the first promotional information in the second browsing record of all the promotional information, and then the counted number may be used as the times that the first promotional information was browsed.

Thirdly, a conversion rate of the first promotional information is calculated according to the number of the target terminals corresponding to first promotional information and the number of times that the first promotional information was browsed.

The server may calculate the conversion rate of the first promotional information according to the number of the target terminals corresponding to first promotional information and the number of times that the first promotional information was browsed. In an actual implementation, the server may calculate a ratio of the number of the target terminals corresponding to the first promotional information to the number of times that the first promotional information was browsed, and then the calculated ratio may be used as the conversion rate of the first promotional information, such that the server may quantize an effect of the first promotional information. In an implementation, in order to improve the conversion rate of the first promotional information, with respect to a first target terminal, the server may determine a type of a promoted item corresponding to promotional information browsed by the first target terminal according to the first browsing record of the first target terminal, and select the promotional information corresponding to the type of the promoted item in the promotional information base of each shop, and then send promotional information in the selected promotional information other than the promotional information browsed by the first target terminal to the first target terminal. In this way, since all promotional information sent to the first target terminal by the server is the promotional information of the item that the user may be interested in, the possibility that the user accesses the destination corresponding to promotional information after browsing the promotional information is high, such that the interference brought to the user caused by the fact that the promotional information sent to the first terminal is useless for the user may be prevented, thus improving the user experience.

It should be explained that, one or more monitors in this embodiment may be provided. For example, if the area of the destination is small, a monitor may obtain all terminal identifications of terminals that access the destination, such that only one monitor may be installed in the shop. If the area of the destination (such as a big megamall) is big, since an irradiated area of the broadcasting signal sent by a terminal is small, a monitor cannot meet a requirement for obtaining all terminal identifications, at this time there may be two or more monitors, which is not limited in the embodiments of the present disclosure.

It should be explained that, referring to Fig. 4C, in an actual application, taking the promotional information being an advertisement as an example, the vendor 41 may install in his/her shop the monitor 42 for monitoring terminals accessing the shop to identify which users of the users accessing the shop are target users, in which the target user is a user accessing the shop after browsing the advertisement published on the internet by the vendor, such that the monitor 42 may monitor broadcasting signals sent by the terminals accessing the shop, and thus accessing records of the terminals accessing the shop may be obtained. In addition, when the vendor 41 publishes the advertisement on a platform, the platform may send the advertisement published by the vendor 41 to the user 43, and record an advertisement browsing record of the user 43 when the user 43 is browsing the advertisement. The system may obtain the accessing records corresponding to the shop from the monitor 42 at predetermined intervals and obtain the advertisement browsing records of the users from the platform, and then identify whether the users are target users according to the accessing records and the advertisement browsing records. In this way, the vendor may identify which users in the users accessing the shop are target users through the system, and then the vendor may pay for the advertisement to the platform on which the advertisement is published according to the number of the target users, such that the problem that the vendor 41 pays a lot for the advertisement while the advertisement published by the vendor appeals to nobody or few customers is solved.

Device embodiments of the present disclosure will be described below, which are configured to perform the method embodiments of the present disclosure. Concerning details not disclosed in the device embodiments of the present disclosure, reference is made to the method embodiments of the present disclosure.

Fig. 5 is a block diagram of a device for identifying target terminals according to an exemplary embodiment of the present disclosure. As shown in Fig. 5, the device for identifying target terminals is applied in the server 120 in the operating environment illustrated in Fig. 1, the device for identifying target terminals includes, but is not limited to, a first obtaining module 510, a second obtaining module 520 and a terminal identifying module 530.

The first obtaining module 510 is configured for obtaining accessing records of terminals accessing a destination.

The second obtaining module 520 is configured for obtaining a plurality of first browsing records corresponding respectively to promotional information browsed by the terminals that access the destination.

The terminal identifying module 530 is configured for identifying the target terminals according to the accessing records obtained by the first obtaining module 510 and the plurality of first browsing records obtained by the second obtaining module 520, in which the target terminals are terminals accessing the destination after browsing promotional information corresponding to the destination.

As described above, with the device for identifying target terminals according to embodiments of the present disclosure, by obtaining accessing records of terminals accessing a destination, obtaining a plurality of first browsing records corresponding respectively to promotional information browsed by the terminals that access the destination, and then identifying the target terminals according to the accessing records and the plurality of first browsing records in which the target terminals are terminals accessing the destination after browsing promotional information corresponding to the destination, the problem in a related art that a vendor cannot determine whether the promotional information published on a website appeals to customers or cannot determine how many customers the promotional information appeals to is solved, and an effect of determining which terminals of the terminals accessing a destination are terminals accessing the destination after browsing promotional information corresponding to the destination is achieved, and thus the vendor can determine how many customers the promotional information published on the website appeals to.

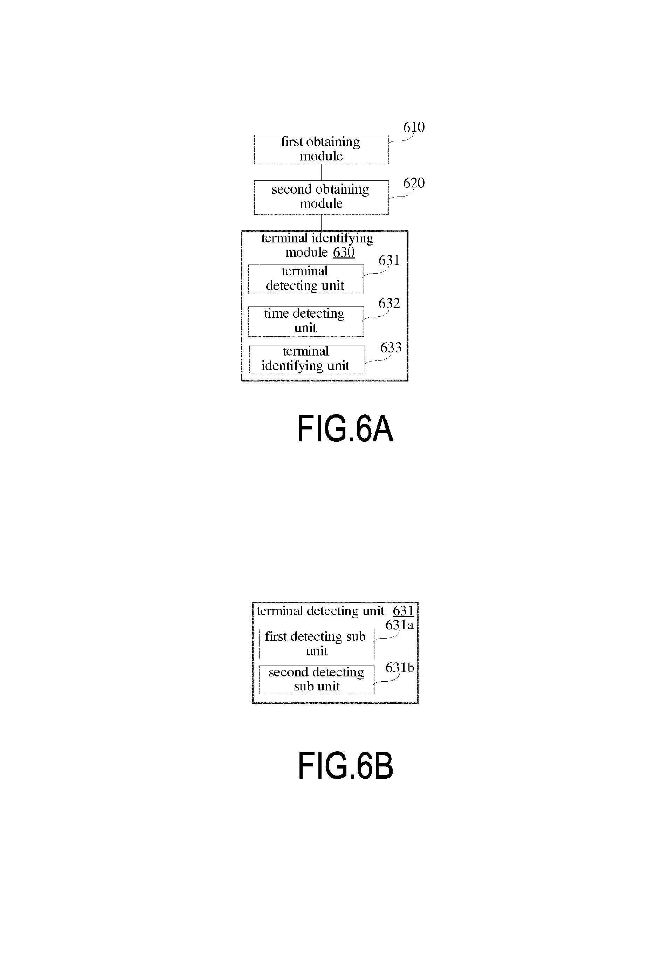

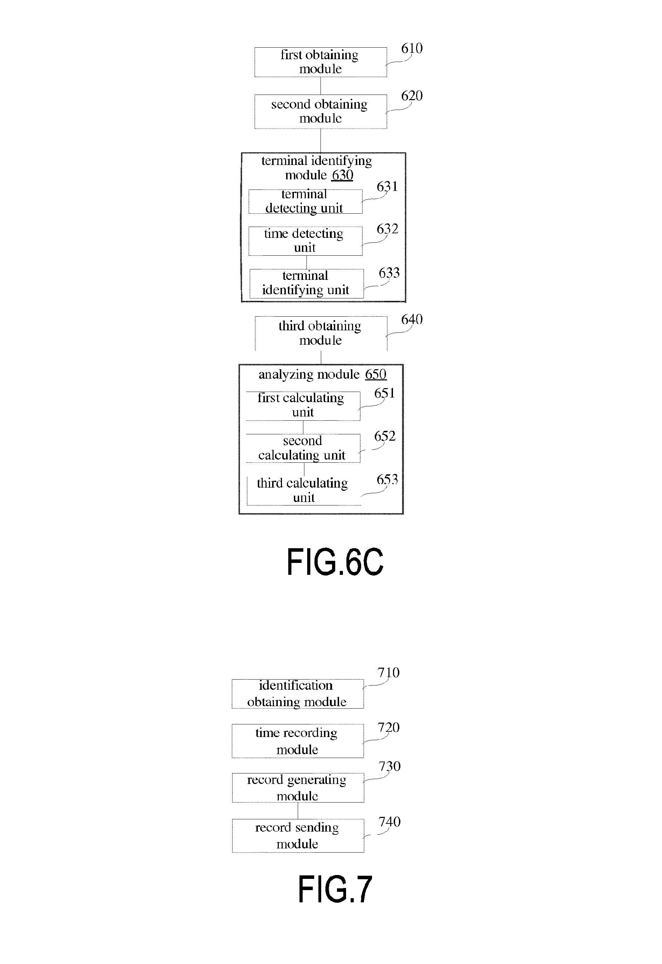

Fig. 6 is a block diagram of a device for identifying target terminals according to an exemplary embodiment of the present disclosure. As shown in Fig. 6, the device for identifying target terminals is applied in the server 120 in the operating environment illustrated in Fig. 1, the device for identifying target terminals comprises, but is not limited to, a first obtaining module 610, a second obtaining module 620 and a terminal identifying module 630.

The first obtaining module 610 is configured for obtaining accessing records of terminals accessing a destination.

The second obtaining module 620 is configured for obtaining a plurality of first browsing records corresponding respectively to promotional information browsed by the terminals that access the destination.

The terminal identifying module 630 is configured for identifying the target terminals according to the accessing records obtained by the first obtaining module 610 and the plurality of first browsing records obtained by the second obtaining module 620, in which the target terminals are terminals accessing the destination after browsing promotional information corresponding to the destination.

In an implementation of this embodiment, the terminal identifying module 630 includes: a terminal detecting unit 631, configured for detecting whether the promotional information corresponding to the destination was browsed by a first terminal according to the plurality of first browsing records; a time detecting unit 632, configured for detecting whether a browsing time of the first terminal is earlier than an accessing time when the first terminal accesses the destination, if a detect result of the terminal detecting unit 631 indicates that the promotional information corresponding to the destination was browsed by the first terminal; a terminal identifying unit 633, configured for identifying the first terminal as one of the target terminals, if a detect result of the time detecting unit 632 indicates that the browsing time is earlier than the accessing time.

Referring to Fig. 6B, in another implementation of this embodiment, the terminal detecting unit 631 comprises: a first detecting sub unit 631a, configured for detecting whether there is a first browsing record comprising a terminal identification of the first terminal and a destination identification of the destination, if each of the plurality of first browsing records comprises a terminal identification, a promotional information identification, a destination identification and a browsing time corresponding to the promotional information; a second detecting sub unit 631b, configured for obtaining a promotional information base corresponding to the destination and detecting whether the promotional information corresponding to the destination was browsed by the first terminal according to the first browsing record and the promotional information base, if each of the plurality of first browsing records comprises a terminal identification, a promotional information identification and a browsing time.

In another implementation of this embodiment, the time detecting unit 632 is configured for detecting whether the browsing time of the first terminal is within a predetermined time range according to the accessing records, in which the predetermined time range is a period of time earlier than the accessing time when the first terminal accesses the destination.

In another implementation of this embodiment, the first obtaining module 610 is configured for obtaining the accessing records collected by a monitor, in which the accessing records are collected by the monitor provided at the destination according to broadcasting signals sent by the terminals, in which the broadcasting signal comprises a wireless fidelity signal and/or a Bluetooth signal.

Referring to Fig. 6C, in another implementation of this embodiment, the device further includes: a third obtaining module 640, configured for obtaining a second browsing record of all promotional information in a promotional information base corresponding to the destination; an analyzing module 650, configured for analyzing all the promotional information in the promotional information base according to the second browsing record of all the promotional information, the plurality of first browsing records and the accessing records.

In another implementation of this embodiment, the analyzing module 650 includes: a first calculating unit 651, configured for calculating a number of the target terminals corresponding to first promotional information according to the accessing records and the plurality of first browsing records; a second calculating unit 652, configured for calculating a number of times that the first promotional information was browsed according to the second browsing record of all the promotional information; a third calculating unit 653, configured for calculating a conversion rate of the first promotional information according to the number calculated by the first calculating unit 651 and the number of times calculated by the second calculating unit 652.

As described above, with the device for identifying target terminals according to embodiments of the present disclosure, by obtaining accessing records of terminals accessing a destination, obtaining a plurality of first browsing records corresponding respectively to promotional information browsed by the terminals that access the destination, and then identifying the target terminals according to the accessing records and the plurality of first browsing records in which the target terminals are terminals accessing the destination after browsing promotional information corresponding to the destination, the problem in a related art that a vendor cannot determine whether the promotional information published on a website appeals to customers or cannot determine how many customers the promotional information appeals to is solved, and an effect of determining which terminals of the terminals accessing a destination are terminals accessing the destination after browsing promotional information corresponding to the destination is achieved, and thus the vendor can determine how many customers the promotional information published on the website appeals to.

Fig. 7 is a block diagram of a device for monitoring terminals according to an exemplary embodiment of the present disclosure. As shown in Fig. 7, the device for monitoring terminals is applied in the monitor 110 in the operating environment illustrated in Fig. 1, the device for monitoring terminals comprises, but is not limited to, an identification obtaining module 710, a time recording module 720, a record generating module 730 and a record sending module 740.

The identification obtaining module 710 is configured for obtaining terminal identifications of terminals accessing a destination.

The time recording module 720 is configured for recording accessing time of the terminals.

The record generating module 730 is configured for generating accessing records of the terminals accessing the destination according to the terminal identifications of the terminals obtained by the identification obtaining module 710 and the accessing time of the terminals recorded by the time recording module 720.

The record sending module 740 is configured for sending to a server the accessing records generated by the record generating module 730, in which the accessing records are configured for instructing the server to obtain a plurality of first browsing records corresponding to promotional information browsed by the terminals that accesses the destination, and to identify target terminals according to the accessing records and the plurality of first browsing records, in which the target terminals are terminals accessing the destination after browsing promotional information corresponding to the destination.

As described above, with the device for monitoring terminals according to embodiments of the present disclosure, by recording terminal identifications and accessing time of terminals accessing a destination, generating accessing records of the terminals accessing the destination according to the terminal identifications and the accessing time of the terminals and sending the accessing records to a server such that the server may obtain a plurality of first browsing records corresponding respectively to promotional information browsed by the terminals that access the destination and then identify target terminals according to the accessing records and the plurality of first browsing records, in which the target terminals are terminals accessing the destination after browsing promotional information corresponding to the destination, the problem in a related art that a vendor cannot determine whether the promotional information published on a website appeals to customers or cannot determine how many customers the promotional information appeals to is solved, and an effect of determining which terminals of the terminals accessing a destination are terminals accessing the destination after browsing promotional information corresponding to the destination is achieved, and thus the vendor can determine how many customers the promotional information published on the website appeals to.

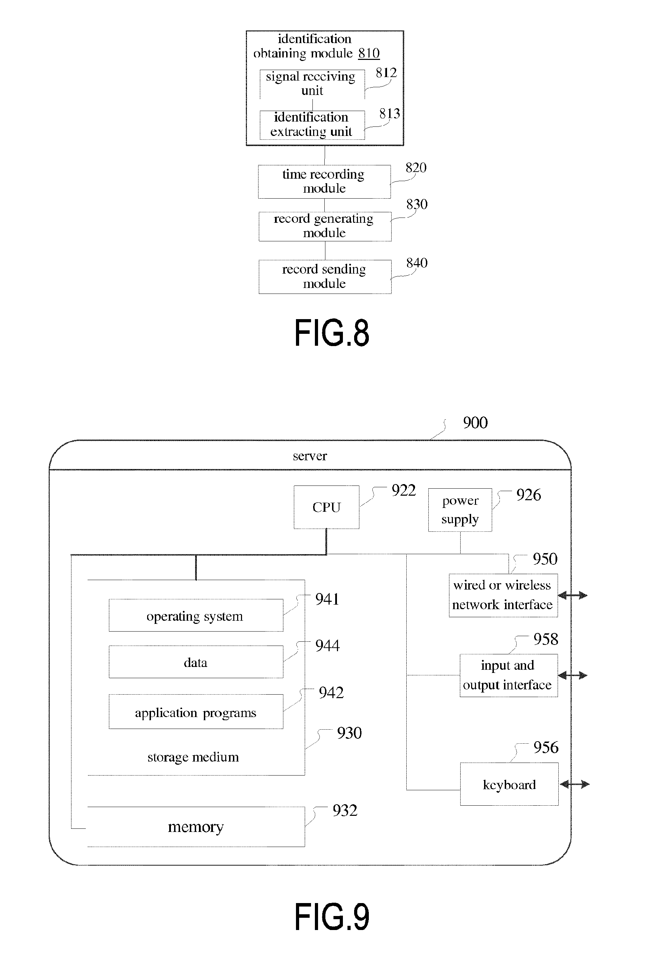

Fig. 8 is a block diagram of a device for monitoring terminals according to an exemplary embodiment of the present disclosure. As shown in Fig. 8, the device for monitoring terminals is applied in the monitor 110 in the operating environment illustrated in Fig. 1, the device for monitoring terminals comprises, but is not limited to, an identification obtaining module 810, a time recording module 820, a record generating module 830 and a record sending module 840.

The identification obtaining module 810 is configured for obtaining terminal identifications of terminals accessing a destination.

The time recording module 820 is configured for recording accessing time of the terminals.

The record generating module 830 is configured for generating accessing records of the terminals accessing the destination according to the terminal identifications of the terminals obtained by the identification obtaining module 810 and the accessing time of the terminals recorded by the time recording module 820.

The record sending module 840 is configured for sending the accessing records generated by the record generating module 830 to a server, in which the accessing records are configured for instructing the server to obtain a plurality of first browsing records corresponding to promotional information browsed by the terminals that accesses the destination, and to identify target terminals according to the accessing records and the plurality of first browsing records, in which the target terminals are terminals accessing the destination after browsing promotional information corresponding to the destination.

In a possible implementation of this embodiment, the identification obtaining module 810 includes: a signal receiving unit 811, configured for receiving a broadcasting signal sent by a first terminal, in which the broadcasting signal comprises a wireless fidelity signal and/or a Bluetooth signal; an identification extracting unit 812, configured for extracting the terminal identification of the first terminal from the broadcasting signal received by the signal receiving unit 811, in which the terminal identification comprises a MAC address of the first terminal.

As described above, with the device for monitoring terminals according to embodiments of the present disclosure, by recording terminal identifications and accessing time of terminals accessing a destination, generating accessing records of the terminals accessing the destination according to the terminal identifications and the accessing time of the terminals and sending the accessing records to a server such that the server may obtain a plurality of first browsing records corresponding respectively to promotional information browsed by the terminals that access the destination and then identify target terminals according to the accessing records and the plurality of first browsing records, in which the target terminals are terminals accessing the destination after browsing promotional information corresponding to the destination, the problem in a related art that a vendor cannot determine whether the promotional information published on a website appeals to customers or cannot determine how many customers the promotional information appeals to is solved, and an effect of determining which terminals of the terminals accessing a destination are terminals accessing the destination after browsing promotional information corresponding to the destination is achieved, and thus the vendor can determine how many customers the promotional information published on the website appeals to.

Embodiments of the present disclosure provide a system for identifying target terminals which may include a server and a monitor. The server is connected with the monitor via a wired or wireless network, the server includes a device for identifying target terminals illustrated in Fig. 5, Fig. 6a or Fig 6c. The monitor is connected with the server via a wired or wireless network, the monitor includes a device for monitoring terminals illustrated in Fig. 7 or Fig 8. Concerning the detailed description of the device for identifying target terminals, reference is made to embodiments corresponding to the device for identifying target terminals; and concerning the detailed description of the device for monitoring terminals, reference is made to embodiments corresponding to the device for monitoring terminals, which are not described herein.

As described above, with the system for identifying target terminals according to embodiments of the present disclosure, by obtaining accessing records of terminals accessing a destination, obtaining a plurality of first browsing records corresponding respectively to promotional information browsed by the terminals that access the destination, and then identifying the target terminals according to the accessing records and the plurality of first browsing records in which the target terminals are terminals accessing the destination after browsing promotional information corresponding to the destination, the problem in a related art that a vendor cannot determine whether the promotional information published on a website appeals to customers or cannot determine how many customers the promotional information appeals to is solved, and an effect of determining which terminals of the terminals accessing a destination are terminals accessing the destination after browsing promotional information corresponding to the destination is achieved, and thus the vendor can determine how many customers the promotional information published on the website appeals to.

It should be explained that, the device for identifying target terminals and the device for monitoring terminals provided in the above embodiments merely take the above modules as an example when the device for identifying target terminals identifies the target terminals and the device for monitoring terminals monitors the terminals. In an actual implementation, the above functions may be implemented by different modules as needed. That is, an inner structure of the terminal may be divided into different modules, so as to implement part or all of the above functions. In addition, the device for identifying target terminals provided in the above embodiments and the embodiments regarding the method for identifying target terminals belong to a same concept, and the device for monitoring terminals and the embodiments regarding the method for monitoring terminals belong to a same concept, concerning the specific implementations of the device for identifying target terminals and the device for monitoring terminals, reference is made to embodiments of the methods, which are not elaborated herein.

Fig. 9 is a schematic diagram of a server according to an exemplary embodiment of the present disclosure. The server 900 may vary widely in configuration or capabilities, but it may include one or more central processing units (CPUs) 922 and a memory 932, one or more storage mediums 930 (such as one or more mass storage devices) for storing application programs 942 or data 944. The memory 932 and the storage mediums 930 may be transitory or non-transitory. The application programs stored in the storage mediums 930 may include one or more modules (not shown), each module may include a series of instructions for the server. Furthermore, the central processing unit 922 may be configured to communicate with the storage medium 930 to execute the series of instructions stored in the storage medium 930 on the server 900 to perform all or part of the steps in the above described methods at the server side.

The server 900 may further include one or more power supplies 926, one or more wired or wireless network interfaces 950, one or more input and output interfaces 958, one or more keyboards 956 and/or one or more operating systems 941, such as Windows ServerTM, Mac OS XTM, UnixTM, LinuxTM, FreeBSDTM and so on.

In exemplary embodiments, there is also provided a non-transitory computer-readable storage medium including instructions, such as the memory 1004 including instructions, and the instructions are executable by the processor 922 of the server 900, for performing the above-described methods. For example, the non-transitory computer-readable storage medium may be a ROM, a RAM (random access memory), a CD-ROM, a magnetic tape, a floppy disc, an optical data storage device, and the like.

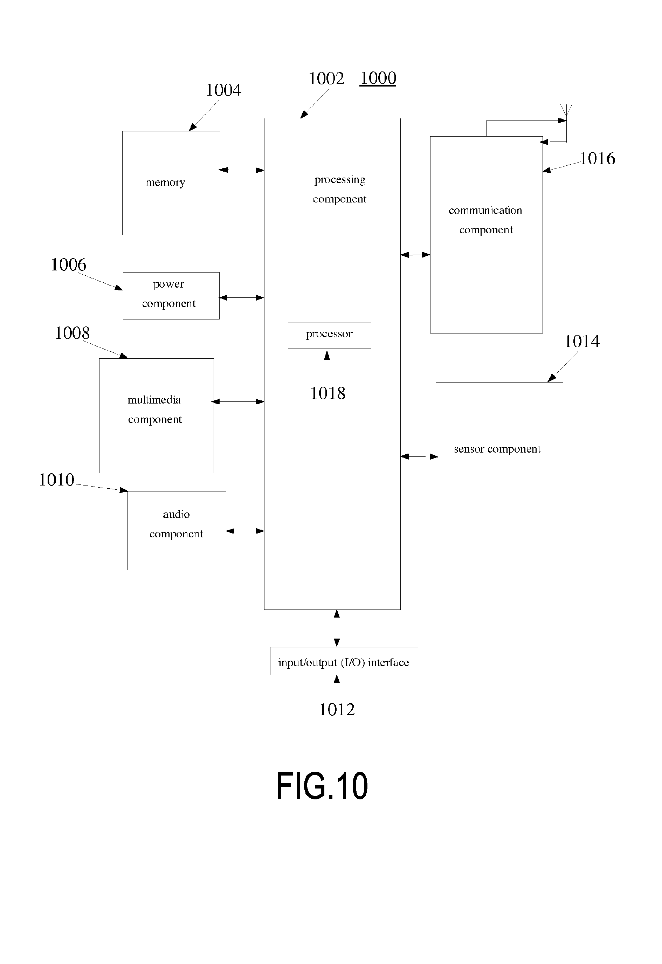

Fig. 10 is a schematic diagram of a monitor 1000 according to an exemplary embodiment of the present disclosure. For example, the monitor 1000 may be a mobile phone, a computer, a digital broadcasting terminal, a message receiving and sending equipment, a game controller, a tablet device, a medical equipment, a fitness equipment, a PDA and so on.

Referring to Fig. 10, the monitor 1000 may include one or more of the following components: a processing component 1002, a memory 1004, a power component 1006, a multimedia component 1008, an audio component 1010, an input/output (I/O) interface 1012, a sensor component 1014, and a communication component 1016.

The processing component 1002 typically controls overall operations of the monitor 1000, such as the operations associated with display, telephone calls, data communications, camera operations, and recording operations. The processing component 1002 may include one or more processors 1018 to execute instructions to perform all or part of the steps in the above described methods at the monitor side. Moreover, the processing component 1002 may include one or more modules which facilitate the interaction between the processing component 1002 and other components. For instance, the processing component 1002 may include a multimedia module to facilitate the interaction between the multimedia component 1008 and the processing component 1002.

The memory 1004 is configured to store various types of data to support the operation of the monitor 1000. Examples of such data include instructions for any applications or methods operated on the monitor 1000, contact data, phonebook data, messages, pictures, videos, etc. The memory 1004 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1006 provides power to various components of the monitor 1000. The power component 1006 may include a power management system, one or more power sources, and any other components associated with the generation, management, and distribution of power in the monitor 1000.

The multimedia component 1008 includes a screen providing an output interface between the monitor 1000 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a duration and a pressure associated with the touch or swipe action. In some embodiments, the multimedia component 1008 includes a front camera and/or a rear camera. The front camera and the rear camera may receive an external multimedia datum while the monitor 1000 is in an operation mode, such as a photographing mode or a video mode. Each of the front camera and the rear camera may be a fixed optical lens system or have focus and optical zoom capability.

The audio component 1010 is configured to output and/or input an audio signal. For example, the audio component 1010 includes a microphone ("MIC") configured to receive an external audio signal when the monitor 1000 is in an operation mode, such as a call mode, a recording mode, and a voice recognition mode. The received audio signal may be further stored in the memory 1004 or transmitted via the communication component 1016. In some embodiments, the audio component 1010 includes a speaker to output audio signals.

The I/O interface 1012 provides an interface between the processing component 1002 and peripheral interface modules, such as a keyboard, a click wheel, buttons, and the like. The buttons may include, but are not limited to, a home button, a volume button, a starting button, and a locking button.

The sensor component 1014 includes one or more sensors to provide status assessments of various aspects of the monitor 1000. For instance, the sensor component 1014 may detect an opened/closed status of the monitor 1000, relative positioning of components (e.g., the display and the keypad) of the monitor 1000, a change in position of the monitor 1000 or a component of the monitor 1000, a presence or absence of user contact with the monitor 1000, an orientation or an acceleration/deceleration of the monitor 1000, and a change in temperature of the monitor 1000. The sensor component 1014 may include a proximity sensor configured to detect the presence of nearby objects without any physical contact. The sensor component 1014 may also include a light sensor, such as a CMOS or CCD image sensor, for use in imaging applications. In some embodiments, the sensor component 1014 may also include an accelerometer sensor, a gyroscope sensor, a magnetic sensor, a pressure sensor, or a temperature sensor.

The communication component 1016 is configured to facilitate wired or wireless communication between the monitor 1000 and other devices. The monitor 1000 can access a wireless network based on a communication standard, such as WiFi, 2G, or 3G, or a combination thereof. In one exemplary embodiment, the communication component 1016 receives a broadcast signal or broadcast associated information from an external broadcast management system via a broadcast channel. In one exemplary embodiment, the communication component 1016 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the monitor 1000 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods according to embodiments of the present disclosure.

In exemplary embodiments, there is also provided a non-transitory computer-readable storage medium including instructions, such as the memory 1004 including instructions, and the instructions are executable by the processor 1018 of the monitor 1000, for performing the above-described methods. For example, the non-transitory computer-readable storage medium may be a ROM, a RAM (random access memory), a CD-ROM, a magnetic tape, a floppy disc, an optical data storage device, and the like.

A system for identifying target terminals is provided. The system may include the server illustrated in Fig. 9 and the monitor illustrated in Fig. 10. Concerning the detailed descriptions of the server and the monitor, reference is made to the corresponding embodiments, which are not elaborated herein.

As described above, with the system for identifying target terminals according to embodiments of the present disclosure, by obtaining accessing records of terminals accessing a destination, obtaining a plurality of first browsing records corresponding respectively to promotional information browsed by the terminals that access the destination, and then identifying the target terminals according to the accessing records and the plurality of first browsing records in which the target terminals are terminals accessing the destination after browsing promotional information corresponding to the destination, the problem in a related art that a vendor cannot determine whether the promotional information published on a website appeals to customers or cannot determine how many customers the promotional information appeals to is solved, and an effect of determining which terminals of the terminals accessing a destination are terminals accessing the destination after browsing promotional information corresponding to the destination is achieved, and thus the vendor can determine how many customers the promotional information published on the website appeals to.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the present disclosure as come within known or customary practice in the art. It is intended that the specification and examples be considered as exemplary only, with a true scope and spirit of the disclosure being indicated by the following claims.

It will be appreciated that the present disclosure is not limited to the exact construction that has been described above and illustrated in the accompanying drawings, and that various modifications and changes can be made without departing from the scope thereof. It is intended that the scope of the disclosure only be limited by the appended claims.

## Claims

1. A method for identifying target terminals, comprising:
obtaining (201) accessing records of terminals accessing a destination;
obtaining (202) a plurality of first browsing records corresponding respectively to promotional information browsed by the terminals that access the destination;
identifying (203) the target terminals according to the accessing records and the plurality of first browsing records, wherein the target terminals are terminals accessing the destination after browsing promotional information corresponding to the destination.

2. The method according to claim 1, wherein identifying target terminals according to the accessing records and the plurality of first browsing records comprises:
detecting (407) whether the promotional information corresponding to the destination was browsed by a first terminal according to the plurality of first browsing records;
detecting (408) whether a browsing time of the first terminal is earlier than an accessing time when the first terminal accesses the destination, if it is detected that the promotional information corresponding to the destination was browsed by the first terminal;
identifying (409) the first terminal as one of the target terminals, if it is detected that the browsing time is earlier than the accessing time.

3. The method according to claim 2, wherein detecting whether the promotional information corresponding to the destination was browsed by a first terminal according to the plurality of first browsing records comprises:
detecting whether there is a first browsing record comprising a terminal identification of the first terminal and a destination identification of the destination, if each of the plurality of first browsing records comprises a terminal identification, a promotional information identification, a destination identification and a browsing time corresponding to the promotional information;
obtaining a promotional information base corresponding to the destination and detecting whether the promotional information corresponding to the destination was browsed by the first terminal according to the first browsing record and the promotional information base, if each of the plurality of first browsing records comprises a terminal identification, a promotional information identification and a browsing time.

4. The method according to claim 2, wherein detecting whether a browsing time of the first terminal is earlier than an accessing time when the first terminal accesses the destination comprises:
detecting whether the browsing time of the first terminal is within a predetermined time range according to the accessing records, wherein the predetermined time range is a period of time earlier than the accessing time when the first terminal accesses the destination.

5. The method according to any of claims 1-4, wherein obtaining accessing records of terminals accessing a destination comprises:
obtaining the accessing records collected by a monitor, wherein the accessing records are collected by the monitor provided at the destination according to broadcasting signals sent by the terminals, wherein the broadcasting signal comprises a wireless fidelity signal and/or a Bluetooth signal.

6. The method according to any of claims 1-4, further comprising:
obtaining (410) a second browsing record of all promotional information in a promotional information base corresponding to the destination;
analyzing (411) all the promotional information in the promotional information base according to the second browsing record of all the promotional information, the plurality of first browsing records and the accessing records.

7. The method according to claim 6, wherein analyzing all the promotional information in the promotional information base according to the second browsing record of all the promotional information, the plurality of first browsing records and the accessing records comprises:
calculating a number of the target terminals corresponding to first promotional information according to the accessing records and the plurality of first browsing records;
calculating a number of times that the first promotional information was browsed according to the second browsing record of all the promotional information;
calculating a conversion rate of the first promotional information according to said number of the target terminals and said number of times.

8. A method for monitoring terminals, comprising:
obtaining (301) terminal identifications of terminals accessing a destination;
recording (302) accessing time of the terminals;
generating (303) accessing records of the terminals accessing the destination according to the terminal identifications and the accessing time of the terminals;
sending (304) the accessing records to a server, wherein the accessing records are configured for instructing the server to obtain a plurality of first browsing records corresponding respectively to promotional information browsed by the terminals that access the destination, and to identify target terminals according to the accessing records and the plurality of first browsing records, wherein the target terminals are terminals accessing the destination after browsing promotional information corresponding to the destination.

9. The method according to claim 8, wherein obtaining terminal identifications of terminals accessing a destination comprises:
receiving a broadcasting signal sent by a first terminal, wherein the broadcasting signal comprises a wireless fidelity signal and/or a Bluetooth signal;
extracting a terminal identification of the first terminal from the broadcasting signal, wherein the terminal identification comprises a MAC address of the first terminal.

10. A device for identifying target terminals, comprising:
a first obtaining module (510, 610), configured for obtaining accessing records of terminals accessing a destination;
a second obtaining module (520, 620), configured for obtaining a plurality of first browsing records corresponding respectively to promotional information browsed by the terminals that access the destination;
a terminal identifying module (530, 630), configured for identifying the target terminals according to the accessing records obtained by the first obtaining module and the plurality of first browsing records obtained by the second obtaining module, wherein the target terminals are terminals accessing the destination after browsing promotional information corresponding to the destination.

11. A device for monitoring terminals, comprising:
an identification obtaining module (710, 810), configured for obtaining terminal identifications of terminals accessing a destination;
a time recording module (720, 820), configured for recording accessing time of the terminals;
a record generating module (730, 830), configured for generating accessing records of the terminals accessing the destination according to the terminal identifications of the terminals obtained by the identification obtaining module (710, 810) and the accessing time of the terminals recorded by the time recording module (720, 820);
a record sending module (740, 840), configured for sending the accessing records generated by the record generating module (730, 830) to a server, wherein the accessing records are configured for instructing the server to obtain a plurality of first browsing records corresponding respectively to promotional information browsed by the terminals that access the destination, and to identify target terminals according to the accessing records and the plurality of first browsing records, wherein the target terminals are terminals accessing the destination after browsing promotional information corresponding to the destination.

12. A computer program including instructions for executing the steps of a method for identifying target terminals according to any one of claims 1 to 7 when said program is executed by a computer.

13. A recording medium readable by a computer and having recorded thereon a computer program including instructions for executing the steps of a method for identifying target terminals according to any one of claims 1 to 7.

14. A computer program including instructions for executing the steps of a method for monitoring terminals according to any one of claims 8 to 9 when said program is executed by a computer.

15. A recording medium readable by a computer and having recorded thereon a computer program including instructions for executing the steps of a method for monitoring terminals according to any one of claims 8 to 9.
